(19) Europäisches Patentamt
European Patent Office
Office européen des brevets

(11) EP 2 822 388 B1

(12) EUROPEAN PATENT SPECIFICATION

(45) Date of publication and mention of the grant of the patent:
**06.01.2016 Bulletin 2016/01**

(21) Application number: **13712612.4**

(22) Date of filing: **08.03.2013**

(51) Int Cl.:
***A01N 25/04*** *(2006.01)* ***A01N 25/18*** *(2006.01)*
***A01P 7/04*** *(2006.01)* ***A01N 51/00*** *(2006.01)*
***A01N 53/00*** *(2006.01)*

(86) International application number:
**PCT/PT2013/000013**

(87) International publication number:
**WO 2013/133731 (12.09.2013 Gazette 2013/37)**

(54) **INSECTICIDE FORMULATION, METHOD FOR MANUFACTURING THE SAME AND USE THEREOF**

INSEKTIZIDFORMULIERUNG, VERFAHREN ZU DEREN HERSTELLUNG UND DEREN VERWENDUNG

FORMULATION INSECTICIDE, PROCÉDÉ POUR SA FABRICATION ET SON UTILISATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.03.2012 PT 12106198**

(43) Date of publication of application:
**14.01.2015 Bulletin 2015/03**

(73) Proprietor: **SAPEC Agro S.A.**
**1990-207 Lisboa (PT)**

(72) Inventors:
- **NEVES, José**
  **2901-852 Setúbal (PT)**
- **ESMERALDO, Carlos Manuel Pacheco de Carvalhal**
  **2901-852 Setúbal (PT)**
- **BATHIA, Surendra**
  **Thane 400604(M.S.) (IN)**
- **DUARTE, António Manuel Vasconcelos**
  **1990-207 Lisboa (PT)**

(56) References cited:
**EP-A1- 2 225 940 GB-A- 2 187 957**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 822 388 B1

## Description

### FIELD OF THE INVENTION

The present invention relates to a novel formulation comprising microencapsulated lambda-cyhalothrin and to a combined formulation of said microencapsulated lambda-cyhalothrin with suspended particles of imidacloprid. The invention also relates to the process for the preparation of said formulations and to its use for the control of insects in edible and non-edible crops.

### BACKGROUND OF THE INVENTION

Lambda-cyhalothrin (IUPAC: Reaction mass (1:1) of (R)-α-cyano-3-phenoxybenzyl(1S,3S)-3-[(Z)-2-chloro-3,3,3-trifluoropropenyl]-2,2-dimethylcyclopropanecarboxylate and (S)-α-cyano-3-phenoxybenzyl(1R,3R)-3-[(Z)-2-chloro-3,3,3-trifluoropropenyl]-2,2-dimethylcyclopropanecarboxylate) belongs to the pyrethroid insecticide class, more specifically to the class of pyrethroids in the ester form, and was first described by ICI in 1983 (EP0107296). The structure, as depicted in the FAO Manual, is as follows:

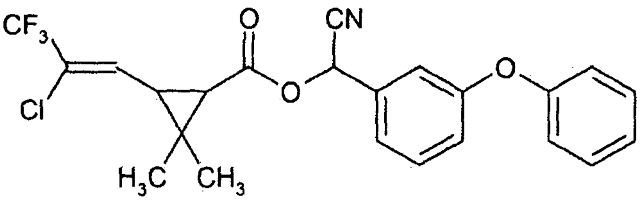

Lambda-cyhalothrin is a synthetic pyrethroid, developed as an insecticide for agricultural applications and it is used to control a wide spectrum of insect pests, *e.g.* aphids, Colorado beetles, thrips, Lepidoptera larvae, Coleoptera larvae, etc.

Lambda-cyhalothrin is a broad spectrum insecticide effective at low rates of application against major insect pests in a wide range of crops, including cotton, soybean, green vegetables, tomato, potato, wheat, barley, maize, sorghum, vines, fruit tree crops, among others.

According to IRAC (Insecticide Resistance Action Committee; IRAC MoA Classification V.7.2, February, 2012), lambda-cyhalothrin belongs to the 3A chemical group. It is a pyrethroid insecticide that acts by contact and ingestion, at nervous system level as a sodium channel modulator. In the insect itself, and because of its lipophilic nature, it penetrates the biological tissues, more particularly penetrates the insect cuticle, disrupting nerve conduction in a very short time. This leads to cessation of feeding, loss of muscular control, paralysis, and eventual death. Additional protection of the crop is provided by the insecticide's strong repellent effect toward insects.

In the past years extensive research as been done to obtain phytopharmaceutical formulations that are less hazardous to the end-user but at the same time efficient in pest control. Capsule suspension formulations were a major breakthrough in the objective to find a product, namely an insecticide that is safer and more effective.

In this kind of formulation, the release of the insecticide, namely a pyrethroid, is done in a controlled manner providing a high persistence of action in the control of pests. Also, it is known that the pyrethroid lambda-cyhalothrin is skin irritant (see "WHO; Environmental Health Criteria 99: Cyhalothrin (1990)"). The encapsulation of the mentioned pyrethroid lowers the risk of exposure of the operator providing therefore a safer environment.

In recent past, efforts have been directed towards the development of capsule suspension (CS) formulations wherein the pyrethroid is released periodically, ensuring this way a sustained release over time. This fact renders a better performance due to the availability of the active substance at a constant and more prolonged rate of release.

The technology of microcapsule formulation has been in existence for a number of years, and is particularly adaptable to agricultural purposes; in particular this technology has been used for the incorporation of a specific insecticide in a protective wall coating for later dissemination. Once encapsulated, the insecticide is preserved until it is released by the breaking of the capsule.

EP0427991B1 discloses the encapsulation by interfacial polymerization of fenithrothion or other organophosphorous insecticides in combination with several emulsified or suspended pyrethroids including fenpropathrin, permethrin and others. The pyrethroid is never enclosed in the microcapsules, and no information is given regarding the precise conditions to be used in the preparation of an encapsulated formulation of lambda-cyhalothrin.

There are specific approaches to the encapsulation process of lambda-cyhalothrin. EP0902724 discloses a microencapsulation process specifically directed to lambda-cyhalothrin. Said process differs from the one described in the present invention in that the capsules are made of a different material, polyurea, instead of polyurethane. Patents

US6077522 and US6149843 disclose microcapsules of lambda-cyhalothrin with an ultraviolent protectant, which is not required in the present invention.

In the field of agriculture, and distinctively, in the field of insecticides, there is a need for compositions having both slow and fast releasing characteristics, since for example, in the application against ground insects, the release must be slow, while for leaf applications the release must be fast.

The conventional solution for this problem is "tank-mixing", the combination by the user of two or more formulations in the same spray tank in order to reduce the number of spray operations. This solution of mixing two (or more) different marketed products suffers of lack of swiftness and if not performed correctly by the end-user might result in a non-optimized spraying preparation. Furthermore, compatibility between formulations is not always guaranteed, which may cause difficulties in spraying the mixture of products.

Recently, one of the most interesting classes of formulations relates to ZC formulations, a mixture in which one of the active ingredients is provided as a capsule suspension and the other in the form of suspended solid particles outside the mentioned capsules. This renders the very useful factor of having active ingredients with two different modes of action, increasing the effectiveness in pest management, and environment safety of the operator.

EP 2 225 940 describes oil-dispersions of neonicotinoids, optinally with an encapsulated further pesticide.

Imidacloprid (IUPAC: (E)-1-(6-chloro-3-pyridylmethyl)-N-nitroimidazolidin-2-ylideneamine) was first described in EP0192060A1 by Nihon Tokushu Noyaku Seizo K.K. The structure, as depicted in the FAO Manual, is as follows:

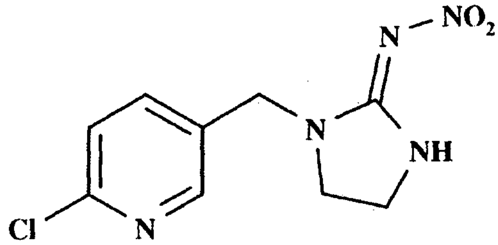

Imidacloprid belongs to a class of chemicals called neonicotinoids and is a systemic, chloro-nicotinyl insecticide with soil, seed and foliar uses. It controls sucking insects (e.g., aphids, rice-hoppers, whiteflies and thrips) and soil insects (*e.g.,* termites) and a few species of biting insects (*e.g.*, rice water weevil and Colorado beetle). It is most commonly used on rice, cereals, maize, potatoes, vegetables, sugar beet, fruit tree crops, cotton, hops and turf.

According to IRAC (Insecticide Resistance Action Committee; IRAC MoA Classification V.7.2, February, 2012), imidacloprid belongs to the 4A group of neonicotinoids, acting as a nicotinic acetylcholine receptor (nAChR) agonist. The mode of action of imidacloprid is based on the interference of nervous impulses transmission, causing the hyperexcitation of the nerve system of the insect itself. The target pest's feeding activity ceases within minutes to hours, and death occurs usually within 1 to 2 days.

Patent application WO2005/015993 describes an insecticide formulation for application in the veterinary field comprising a mixture of lambda-cyhalothrin and imidacloprid in viscous and sticky composition.

Patent application WO2006/008614 claims compositions comprising mixtures of chloronicotinyl compounds (among which is imidacloprid) and pyrethroids (among which is lambda-cyhalothrin) in the form of granules or emulsion concentrates. No mention is made to the specific mixture of lambda-cyhalothrin and imidacloprid.

Presently, there is no available product for agricultural purposes, as part of an integrated resistance management strategy, wherein the two insecticides, lambda-cyhalothrin and imidacloprid, are combined in a ZC formulation.

The marketed product considered to be the most similar in terms of its *modus operandi* when compared to the ZC composition of the present invention is AFICION®, by Makhetshim. It consists of a mixture of a pyrethroid (cyfluthrin) and imidacloprid, in the form of an Emulsion Concentrate.

Due to the issues mentioned above, it is quite clear that there is still a need for products that include encapsulated formulations and mixtures of encapsulated and non-encapsulated formulations, for protection of agriculture assets and goods, which are effective and reduced environment impact.

It is therefore an objective of the present invention the development of a stable crop protection formulation comprising both a fast acting insecticide and a long acting insecticide, with different modes of action, than those presently marketed, said formulation showing excellent efficacy and exhibiting a synergic effect when compared to the individual use of the mentioned insecticides.

This will become apparent by the extensive physical-chemical and biological studies conducted by the inventors.

## SUMMARY OF THE INVENTION

The invention relates to an agrochemical formulation comprising microencapsulated lambda-cyhalothrin suspended in water, characterized in that

- the microcapsules are made of a polyurethane, and
- at least 90% of the microcapsules have a diameter less than 13 $\mu$m.

In an embodiment of the invention, the agrochemical formulation further comprises suspended particles of imidacloprid.
The concentration of lambda-cyhalothrin ranges between 9 and 15 g/l , and the concentration of imidacloprid ranges between 50 and 100 g/l.
In a most preferred embodiment of the invention, the concentration of lambda-cyhalothrin is 12 g/l, and the concentration of imidacloprid is 75 g/l.
The invention also relates to a process of production of the agrochemical formulation, characterized in that it comprises:

- preparing an aqueous phase by dissolving gum arabic in water;
- preparing an oil phase by dissolving lambda-cyhalothrin and an isocyanate in a $C_9$ to $C_{12}$ aromatic solvent;
- dispersing the oil phase into the aqueous phase, using a high shear mixer;
- adding to the dispersion a previously prepared solution of a triol in water;
- adding an anti-freeze agent, heating to a temperature in the range of 50 to 70 °C, and allowing to react for 24 hours under mild agitation;
- cooling to room temperature, adding water in order to adjust the active ingredient concentration, and
- adding a thickening solution.

In one aspect of the invention, the gum arabic concentration ranges from 1 to 3 % w/v in the final product
In another aspect of the invention, the isocyanate concentration ranges from 0.5 to 1 % w/v in the final product
In a further aspect of the invention, the isocyanate is toluene diisocyanate and/or isophoronediisocyanate and/or hexamethylene diisocyanante and the triol is trimethylol propane.
In still another aspect of the invention, the molar ratio of triol to isocyanate is from 0.8:1.2 to 1.2:0.8.
In yet another aspect of the invention the anti-freeze agent concentration ranges from 0.5 to 1 % w/v in the final product.
The above process of preparing an agrochemical formulation formulation further comprises the steps of:

- preparing an imidacloprid suspension concentrate by mixing imidacloprid, an anti-freeze agent, at least one surfactant and an anti-foam agent in water, followed by wet milling in a bead mill and adjusting the viscosity of the suspension by adding a thickening solution;
- mixing the imidacloprid suspension concentrate formulation thus obtained, the microencapsulated lambda-cyhalothrin formulation and water, and
- adding a thickening solution.

The invention further relates to the use of the formulations according to the invention for the control of insects that affect edible and non-edible crops.

## BRIEF DESCRIPTION OF THE FIGURES

**Figure 1:** efficacy results of the lambda-cyhalothrin CS formulation according to the invention against *Leptinotarsa decemlineata* in Potato, compared to Karate®.

**Figure 2:** foliar feeding damage results expressed in % by *Leptinotarsa decemlineata* in the modalities treated with

the lambda-cyhalothrin CS formulation according to the invention in Potato, compared to Karate®.

**Figure 3:** efficacy results of the lambda-cyhalothrin CS formulation according to the invention against *Helicoverpa armigera* in Tomato, compared to Karate®.

**Figure 4:** foliar feeding damage results expressed in % by *Helicoverpa armigera* in the modalities treated with the lambda-cyhalothrin CS formulation according to the invention in Tomato, compared to Karate®.

## DETAILED DESCRIPTION OF THE INVENTION

The object of the present invention is to provide a formulation containing microcapsules of lambda-cyhalothrin suspended in water, said capsules being formed by an interfacial polymerization process, wherein a polymerization reaction takes place at the surface of the droplets of an oil phase dispersed in a continuous aqueous phase.

The oil phase comprises the active substance, lambda-cyhalothrin and one of the monomers, an isocyanate, whereas the aqueous phase comprises the other monomer, a triol, the polymerization reaction between the monomers yielding a polyurea, which forms a polymeric shell encapsulating the active substance.

The molar ratio between the triol and the isocyanate determines the degree of reticulation of the polymer and, thus, the release rate of the encapsulated active substance.

A further objective of the present invention is to provide a combined formulation comprising the microencapsulated lambda-cyhalothrin and a suspension of particles of imidacloprid, which is stable upon storage and has reduced risks for the applicant when compared to traditional formulations such as, for example, emulsifiable concentrates, since the continuous phase is water.

As used herein, the expressions "CS formulation", "SC formulation" and "ZC formulation" are the international denominations adopted by the FAO (Food and Agricultural Organization of the United Nations) to designate "aqueous suspension of capsules", "aqueous suspension of solid fine particles" and "stable aqueous suspension of microcapsules and solid fine particles".

The process for the preparation of the agrochemical formulation according to the invention comprises the following steps:

i. preparing an aqueous phase by dissolving the dispersing agent in water, the preferred dispersing agent being gum arabic; the concentration of the dispersing agent in the final product being in the range of 1 to 3% (w/v);

ii. preparing an oil phase by dissolving lambda-cyhalothrin, and a first monomer (isocyanate), in a $C_9$ to $C_{12}$ aromatic solvent, such as Solvesso 200 ND from Exxon Mobil; the isocyanate concentration being in the range of 0.5 to 1% w/v in the final product and being selected from the group consisting of toluene diisocyanate, isophoronediisocyanate, hexamethylene diisocyanate and mixtures thereof;

iii. dispersing the oil phase into the water phase using a high shear mixer, in order to form droplets having a particle size distribution with $d_{90}$ lower than 13 $\mu$m;

iv. stopping the high shear mixer once the dispersion is complete, and adding a previously prepared aqueous solution of a second monomer (a triol such as trimethylolpropane) to the mixture under mild agitation, in such a way that the molar ratio between the triol and the isocyanate ranges from 0.8:1.2 to 1.2:0.8;

v. adding an anti-freeze agent to the mixture, preferably a glycol, more preferably propylene glycol; the concentration of the anti-freeze agent being in the range of 0.5 to 1% w/v in the final product;

vi. heating to about 50 to 70 °C, preferably 60 °C, and allowing to react for 12 to 24 h under mild stirring, in order to trigger the interfacial polymerization reaction between the first monomer dissolved in the oil phase and the second monomer dissolved in the water phase to form a polymeric shell around the lambda-cyhalothrin containing droplets of the oil phase;

vii. cooling to room temperature, adding water in order to adjust the active substance concentration, and an aqueous solution containing a bactericide agent, namely Preventol® Bit 20N (a min. 20% aqueous glycolic solution of benzisothiazolinone) commercially available from Lanxess, and an anti-settling agent, xanthan gum, herein below designated as "thickening solution". The concentration of the anti-settling agent in the thickening solution is 2% w/v and the concentration of the bactericide agent is 1% w/v. The viscosity of the formulation is adjusted to about 800-1200 cP;

viii. preparing an imidacloprid suspension concentrate (SC formulation), as follows:

- adding, by order, water, an antifreeze agent such as propylene glycol, a dispersing agent, a wetting agent, an anti-foam agent, and imidacloprid, and mixing so as to obtain an homogeneous suspension (the preferred dispersing agents are non-ionic polymethyl methacrylate-polyethylene oxide graft copolymers, such as Atlox 4913 commercially available from Croda, the preferred wetting agents are polyoxyethylene alkyl ethers, such as Atlox 4894 commercially available from Croda, and the preferred anti-foam agents are emulsions of polydimethylsiloxane in water such as AF9030 commercially available from Momentive Performance Materials, Inc.);
- pumping the resulting mixture through a refrigerated bead mill (for example, a Dyno-mill), until a particle size distribution with $d_{90}$ within the range of 5 to 10 $\mu$m is obtained; and
- adding, under agitation, the anti-foam agent, followed by an aqueous solution consisting of a bactericide agent and an anti-settling agent (thickening solution) to adjust the viscosity of the suspension to about 800-1200 cP;

ix. mixing the imidacloprid suspension concentrate above obtained, the microencapsulated lambda-cyhalothrin obtained in step vii and water, and

x. if required, adding, under stirring, an aqueous solution consisting of a bactericide agent and an anti-settling agent (thickening solution) to adjust the viscosity of the formulation to about 800-1200 cP.

The ZC formulation contains 9 to 15 g/l of lambda-cyhalothrin and 50 to 100 g/l of imidacloprid.

In a most preferred embodiment, the ZC formulation contains 12 g/l of lambda-cyhalothrin and 75 g/l of imidacloprid.

Surprisingly, it was found that the combined formulation according to the invention shows a synergic effect when compared to the individual use of the same active substances.

The ZC formulation prepared by the above process is used as an insecticide in edible and non-edible crops.

Particularly, ZC formulations of the invention are used for the protection of crops, including but not limited to, insects causing damage in edible crops such as, for example, potato, tomato, pome fruits, stone fruits, citrus, grapevines and vegetables and non-edible crops such as ornamental crops, amenities and forest trees.

The application rate of the formulations of the present invention is from about 0.0036 kg/ha to about 0.0144 kg/ha of the microencapsulated active ingredient and from about 0.0225 kg/ha to about 0.090 kg/ha of the suspended active ingredient, according to the crop to be protected and pests to be controlled.

## EXAMPLES

### Example 1

A microencapsulated lambda-cyhalothrin formulation comprising 100 g/l of active ingredient was prepared as follows:

- an aqueous phase was prepared by dissolving 17.0 g of gum arabic in 325.0 g of water;
- an oil phase was prepared by dissolving 99.3 g of lambda-cyhalothrin and 6.2 g of toluene diisocyanate in 99.3 g of Solvesso 200 ND;
- the oil phase was dispersed into the water phase using a high shear mixer (linear velocity of rotor 13.9 $ms^{-1}$) in order to form droplets with a size distribution with $d_{90}$ less than 13 $\mu$m;
- a solution of 4.8 g of trimethylolpropane in 7.2 g of water was prepared and added to the dispersion previously obtained;
- 6.2 g of propylene glycol were added to the dispersion; and heated to 60 °C, under mild agitation;
- the dispersion was heated to 60 °C and allowed to react under mild stirring for 24 hours to form a capsules suspension;
- the capsules suspension was cooled to room temperature, and 133.0 g of a thickening solution were added and mixed.

### Example 2

A ZC formulation comprising 12 g/l of lambda-cyhalothrin and 75 g/l of imidacloprid was prepared as follows:

a) a microencapsulated lambda-cyhalothrin formulation was prepared, as described in example 1;
b) an imidacloprid aqueous suspension was prepared, as follows:

- 350.0 g imidacloprid were added to a solution containing 408.2 g water, 76.3 g of propylene glycol, 34.1 g of

Atlox 4913, 23.8 g of Atlox 4894, 0.25 g of AF9030, and mixed so as to obtain an homogeneous suspension;

- the resulting suspension was pumped through a refrigerated Dyno-mill, until a particle size distribution with $d_{90}$ within the range from 5 to 10 $\mu$m was obtained;
- 0.25 g of AF 9030 were added, and
- 100.0 g of a thickening solution were added and mixed thoroughly;

c) the ZC formulation was prepared by mixing, under mild agitation, 210.1 g of the imidacloprid suspension concentrate obtained in the above step b), 118.4 g of the microencapsulated lambda-cyhalothrin obtained in the above step a) and 663.9 g of water, followed by the addition of 7.6 g of a thickening solution.

**Example 3**

As another non-limitative example, a ZC formulation comprising 9 g/l of lambda-cyhalothrin and 50 g/l of imidacloprid was prepared as follows:

steps a) and b) were carried out as described in example 2.

c) the ZC formulation was prepared by mixing, under mild agitation, 140.7 g of the imidacloprid suspension concentrate obtained in the above step b), 89.3 g of the microencapsulated lambda-cyhalothrin obtained in the above step a) and 751.9 g of water, followed by the addition of 18.0 g of a thickening solution.

**STABILITY TESTS:**

Stability tests were carried out under the following conditions:

- An accelerated storage test, in which a formulation sample is stored in an oven for 2 weeks at 54 $\pm$ 2 °C, and their physical-chemical and technical properties are compared to those of a sample of the same batch which was not submitted to the test. This test is intended to represent a simulation of the behavior of a formulation after a 2 years storage period.
- A low temperature stability test, carried out by cycling the formulation sample temperature between 20 $\pm$ 2 °C and -10 $\pm$ 2 °C on 18-hour-freeze/6-hour-melt cycles, for a total of 4 cycles, after which their physical and chemical properties are compared to those of a sample of the same batch which was not submitted to the test.

These tests were conducted according to the following legislation and guidelines, which are included herein as references:

- Regulation (EC) No. 1107/2009 of 21 October 2009 and Commission Regulation (EU) No. 545/2011 of 10 June 2011.
- Manual on the Development and Use of FAO and WHO Specifications for Pesticides, November 2010 - second revision of the first edition.
- CIPAC Handbooks Vol. 1A to N, Collaborative International Pesticides Analytical Council.

A. Lambda-cyhalothrin 100g/l CS formulation

Table 1 shows the physical and chemical properties of the Lambda-cyhalothrin 100 g/l CS formulation prepared according to example 1 before and after the accelerated storage test.

Table 1 - Accelerated storage test results.

| | Before accelerated storage test | After accelerated storage test |
|---|---|---|
| Lambda-cyhalothrin content g/l | 103.6 | 103.1 |

(continued)

| | | Before accelerated storage test | After accelerated storage test |
|---|---|---|---|
| pH (1% suspension in water) | | 5.9 | 5.9 |
| Suspensibility (%) at maximum field application concentration | | 94 | 101 |
| Spontaneity of dispersion (%) | | 101 | 101 |
| Persistent foaming (ml of foam) after 1 minute | | 0.0 | Not determined |
| Wet sieve test (% of material > 75$\mu$m) | | 0.01 | 0.02 |
| Particle size distribution | 10.00% < ($\mu$m) | 0.89 | 0.87 |
| | 50.00% < ($\mu$m) | 2.74 | 2.59 |
| | 90.00% < ($\mu$m) | 6.35 | 5.78 |
| | 95.00% < ($\mu$m) | 7.78 | 6.97 |
| Pourability (%) | Residue | 3.9 | 4.4 |

Table 2 shows the physical and chemical properties of the above CS formulation before and after the low temperature stability test.

Table 2 - Low temperature stability test results.

| | Before Freeze/Thaw test | After Freeze/Thaw test |
|---|---|---|
| Lambda-cyhalothrin content g/l | 103.6 | 98.1 |
| pH (1% suspension in water) | 5.9 | 5.9 |

The above results demonstrate that the CS formulation according to the invention shows good stability characteristics.

B. Lambda-cyhalothrin 12g/l and imidacloprid 75g/l ZC formulation

Table 3 shows the physical and chemical properties the above ZC formulation, prepared according to example 2, before and after the accelerated storage test.

Table 3 - Accelerated storage test results.

| | | Before accelerated storage test | After accelerated storage test |
|---|---|---|---|
| Contents g/l | Lambda-cyhalothrin | 13.4 | 12.8 |
| | Imidacloprid | 75.2 | 75.4 |
| Free lambda-cyhalothrin (% relative to total content) | | 0.42 | 0.68 |
| Determination of pH | | 6.2 | 6.0 |
| Suspensibility (%) at maximum field application concentration | Lambda-cyhalothrin | 109 | 109 |
| | Imidacloprid | 105 | 100 |
| Spontaneity of dispersion (%) | Lambda-cyhalothrin | 96 | 96 |
| | Imidacloprid | 96 | 92 |
| Persistent foaming (ml of foam) after 1 minute | | 0 | 0 |
| Wet sieve test (% of material > 75$\mu$m) | | 0.01 | 0.04 |

(continued)

| | | Before accelerated storage test | After accelerated storage test |
|---|---|---|---|
| Particle size distribution | 10.00% < (μm) | 0.81 | 0.80 |
| | 50.00% < (μm) | 3.49 | 3.20 |
| | 90.00% < (μm) | 7.86 | 7.92 |
| | 95.00% < (μm) | 9.33 | 9.47 |
| Pourability (%) | Residue | 3.96 | 3.29 |
| | Rinsed residue | 0.27 | 0.26 |

The above results demonstrate that lambda-cyhalothrin and imidacloprid do not show, after the accelerated test, a percentage of relative degradation higher than 5%, which complies with the requirements of the "Manual on the Development and Use of FAO and WHO Specifications for Pesticides, November 2010".

Also of importance is the percentage of free lambda-cyhalothrin relative to the total content of this active substance found in the product sample, being of only 0.42% and 0.68%, before and after the accelerated test, respectively. This means that only a very small quantity of this active substance is outside the capsule itself, even after the accelerated test. This is a major beneficial factor in terms of end-usage of the composition of the present invention, due to the skin irritating characteristics of lambda-cyhalothrin mentioned herein above.

The suspensibility of the composition was evaluated by CIPAC MT 161. FAO specifies a minimum of 60% found in suspension after 30 minutes at 30°C in standard CIPAC water D. Table 3 shows a suspensibility percentage, before and after the accelerated test for both active substances equal or over 100%, which is well above the minimum required.

The spontaneity of dispersion in % was determined according to CIPAC MT 160, using CIPAC standard water D at 30 ± 1 °C and shows that both active substances are well dispersed (above 90%), before and after accelerated test.

The pourability in % was determined according to CIPAC MT 148. The test of pourability is a direct measure of how the viscosity can influence the product, namely the handling, in particular, the easiness or difficultness to remove all of the content from the agrochemical package and rinse the package for environmental reasons. Although the residue of the composition according to the invention was of 3.96% after pouring out the packaging contents, one internal packaging rinse only was enough to reduce the "residue content" to a merely 0.27%, a very low and interesting value in terms of end-use and environmentally also.

The persistent foaming (mL) was determined according to CIPAC MT 47.2, and the suspension formed after dispersion of the product in CIPAC standard water D did not present any persistent foam after 1 minute.

Table 4 shows the physical and chemical properties of the above ZC formulation before and after the low temperature stability test.

Table 4 - Low temperature stability test results.

| | | Before Freeze/Thaw test | After Freeze/Thaw test |
|---|---|---|---|
| Contents g/l | Lambda-cyhalothrin | 13.4 | 13.4 |
| | Imidacloprid | 75.2 | 75.5 |
| Free lambda-cyhalothrin (% relative to total content) | | 0.42 | 0.45 |
| Determination of pH | | 6.2 | 6.1 |
| Particle size distribution | 10.00% < (μm) | 0.81 | 0.91 |
| | 50.00% < (μm) | 3.49 | 3.28 |
| | 90.00% < (μm) | 7.86 | 7.93 |
| | 95.00% < (μm) | 9.33 | 9.53 |

After the low temperature stability test, the contents of both active substances remained unchanged. As mentioned above, the percentage of free lambda-cyhalothrin relative to the total content of the composition is of major importance. The values, before and after Freeze/Thaw test are 0.42% and 0.45% respectively, meaning that the micro-capsules of lambda-cyhalothrin do not physically break under low temperature stress and keep almost all lambda-cyhalothrin content inside the micro-capsules. As described above, this an important factor to keep the risk of skin irritation of the product, due to lambda-cyhalothrin, at a very low level.

It can also be seen that no significant changes in the particle size were found after the tests. This is of major importance in the end-use of the composition according to the invention, particularly in regard of spraying efficacy in the field.

**BIOLOGICAL STUDIES**

The studies to evaluate the biological efficacy and foliar feeding damage of the compositions according to the invention, against

- Colorado beetle (*Leptinotarsa decemlineata*) in Potato in the case of the ZC formulation, and
- Colorado beetle (*Leptinotarsa decemlineata)* and Cotton bollworm (*Helicoverpa armigera*) in Potato and Tomato in the case of the CS lambda-cyhalothrin formulation,

were conducted by Eurofins Agroscience Services GmbH (Stade, Germany) which is officially recognized as competent to carry out efficacy testing in accordance with the European Commission Directives and applying GEP (Good Experimental Practice) requirements following European and Mediterranean Plant Protection Organization (EPPO) guidelines.

**1. lambda-cyhalothrin and imidacloprid ZC formulation (according to the present invention) *vs.* Lambda-cyhalothrin (CS) formulation and Imidacloprid (SC) formulation**

1.1. Biological Efficacy against Colorado beetle (*Leptinotarsa decemlineata*) and Foliar Feeding damage in Potato

A study was conducted to evaluate the biological efficacy of the lambda-cyhalothrin and imidacloprid ZC formulation (according to the present invention) *vs.* Lambda-cyhalothrin in the form of a capsule suspension (CS) with a concentration of 100 g/l and also imidacloprid in the form of a suspension concentrate (SC) with a concentration of 200 g/l , against Colorado potato beetles on potato leaves.

**Description of the Studies:**

A. Pre-test:

The study consisted of a pre-test where the mortality data was used to estimate the $LC_{70}$, $LC_{80}$, $LC_{90}$ (lethal concentration) for the individual active ingredients and the active ingredient mixture, and a main test where the application of each of the test items was done according to the LC concentrations determined in the pre-test.

A.1. Conditions used

a) Starting with the control (water), leaf discs of potato (Ø 2.5 cm) were dipped for 30 sec. into the test substance (lambda-cyhalothrin plus imidacloprid ZC composition). After drying on a net within 45 minutes, they were placed in petri-dishes. Five minutes before starting the experiment, each leaf disc was placed on a filter paper dampened with 0.5 mL distilled water.

b) 5 new hatched larvae were set on to each of the leaf discs in the petri-dishes.

c) 5, 24 and 48 hours after test initiation, the conditions of the larvae were determined and the number of larvae in the following categories were counted:

- "Live" (when they responded normally after being gently touched), or
- "Dead or Moribund" (when they responded abnormally after being touched).

The percentage of mortality was calculated for each replicate from the number of dead or moribund larvae in

relation to the number of introduced larvae. For this calculation, mortality was defined as the number of dead larvae. The % mortality was corrected according to the corresponding results of the control group by the following formula of Abbott (ABBOTT, W. S., 1925, A method of computing the effectiveness of an Insecticide, J. of Econ. Entomol. 18, 265-267), modified by Schneider-Orelli (SCHNEIDER-ORELLI O., 1947, Entomologisches Praktikum, Aarau, 2. Auflage):

$$M_{corr} = \left( \frac{M_t - M_c}{100 - M_c} \right) \cdot 100\%$$

where,

Mcorr = % corrected mortality
Mt = % mortality of the test group
Mc = % mortality of the control group

This Mortality data was then used to estimate the $LC_{70}$, $LC_{80}$, $LC_{90}$ (lethal concentration) values with the Probit procedure (Normal model) with the 5 h, 24 h and 48 h assessment data. These values are presented in table 5 below.

Table 5 - Lethal Concentrations

| | **$LC_{70}$** | **$LC_{80}$** | **$LC_{90}$** |
|---|---|---|---|
| Product rates of Lambda-Cyhalothrin + Imidacloprid (calculated) | 1.73mL | 2.44ml | 3.94ml |
| Corresponding rates of a.i. in Lambda-Cyhalothrin and Imidacloprid | 0.024 g lambda-cyhalothrin | 0.034 g lambda-cyhalothrin | 0.054 g lambda-cyhalothrin |
| | 0.119 g imidacloprid | 0.168 g imidacloprid | 0.272 g imidacloprid |
| Product rates of Lambda-Cyhalothrin (calculated) | 0.244ml | 0.346ml | 0.550ml |
| Product rates of Imidacloprid (calculated) | 0.561mL | 0.792ml | 1.282mL |

B. Main test

This main test was conducted in the same manner as the Pre-test. Additionally to the lambda-cyhalothrin plus imidacloprid ZC composition, lambda-cyhalothrin (CS, 100 g/l) and imidacloprid (SC, 200 g/l) compositions were tested individually. The application of each test item was done with the calculated lethal concentration ($LC_{70}$, $LC_{80}$ and $LC_{90}$) from Table 5.

The percentage of mortality was calculated from the number of dead or moribund larvae in relation to the introduced number of larvae. Then, the synergistic effects were calculated according to Colby equation (COLBY, R. S., 1967: Calculating synergistic and antagonistic responses of herbicide combinations. Weeds 1S, S.20-22) depicted below. These mortality and the efficacy results are presented in the following Table 6.

$$E = x + y - \left( \frac{x \times y}{100} \right)$$

where:

*E*: expected efficiency in %
*x*: efficiency of active ingredient 1 in %
*y*: efficiency of active ingredient 2 in %

Table 6 - Mortality and synergism results for the three calculated Lethal Concentrations

| Treatment | | Time (Hours) | Number of Specimen | Mortality (number of individuals) | Mortality in | Corrected Mortality | Expected Mortality according to Colby | Height of synergism (%) |
|---|---|---|---|---|---|---|---|---|
| **Control** | | 5 | 40 | 0 | 0 | - | - | - |
| **Lambda-Cyhalothrin + Imidacloprid** | LC 70 | 5 | 40 | 19 | 47.5 | 47.5 | 43.0 | 4.5 |
| | LC 80 | 5 | 40 | 27 | 67.5 | 67.5 | 63.4 | 4.1 |
| | LC 90 | 5 | 40 | 30 | 75 | 75 | 61.8 | 13.2 |
| **Control** | | 24 | 40 | 1 | 2.5 | - | - | - |
| **Lambda-Cyhalothrin + Imidacloprid** | LC 70 | 24 | 40 | 30 | 75 | 74.4 | 58.6 | 15.8 |
| | LC 80 | 24 | 40 | 37 | 92.5 | 92.3 | 75.4 | 16.9 |
| | LC 90 | 24 | 40 | 38 | 95 | 94.9 | 76.3 | 18.6 |
| **Control** | | 48 | 40 | 1 | 2.5 | - | - | - |
| **Lambda-Cyhalothrin + Imidacloprid** | LC 70 | 48 | 40 | 37 | 92.5 | 92.3 | 65.5 | 26.8 |
| | LC 80 | 48 | 40 | 39 | 97.5 | 97.4 | 88.5 | 8.9 |
| | LC 90 | 48 | 40 | 39 | 97.5 | 97.4 | 90.4 | 7.0 |

Table 6 summarizes the results of the main test, including the mortality by the formula of Abott (1925) modified by Schneider-Orelli (1947), the expected effects calculated according to Colby and the observed synergistic effect. A synergistic effect is given in all lethal concentration on all assessment times. The last assessment (48 hours) shows the highest synergism at $LC_{70}$.

Surprisingly, the insecticidal composition according to the present invention presents a higher insect control, with lower or equal concentrations than that seen when the active ingredients are applied by themselves. The insecticidal composition of the present invention is not just an admixture of both ingredients resulting in the aggregation of the properties shown individually, but rather the formulation according to the invention shows synergism providing an unexpected property for a wide range of relevant LC's.

**2. Lambda-cyhalothrin CS formulation (according to the present invention) *vs.* Lambda-cyhalothrin (CS; 100g/l) in the form of KARATE®**

The studies were performed in Greenhouse facilities to evaluate the biological efficacy of the formulation according to the invention against the pests Colorado beetle and Cotton bollworm, and foliar feeding damage, in Potato and Tomato crops, respectively. These studies also included efficacy trials on the mentioned pests and foliar feeding damage assessment of the reference product KARATE®, with Zeon Technology. The Solist variety of Potato and the Montfavet variety of Tomato were used in the studies.

2.1. Biological Efficacy against Colorado beetle (*Leptinotarsa decemlineata*) and Foliar feeding damage, in Potato

Test description:

Adult Colorado beetle were sampled in potato plants in a structure covered with gauze. Eggs produced by the specimens were used for the sensivity trial. Sensitive populations were cultured and resulting larvae tested in the efficacy trials.

For the determination of the efficacy against Colorado beetle, the number of larvae and percentage of damage on all plants were assessed 5 h, 24 h, 5 days and 7 days after application of the compositions, with a concentration of 100g/l and a dosage rate of 1.5g/hl of a.i. each. The data obtained was statistically evaluated. The efficacies and the results of the foliar feeding damage for the composition claimed herein *vs.* reference product were calculated accordingly. The results are presented in Table 7, Figure 1 and Figure 2.

Table 7 - Efficacy according to Abbot against *Leptinotarsa decemlineata* and mean percentage of Foliar feeding damage

| | CS formulation according to the invention (100g/l) | Reference product (KARATE®, 100g/l, with Zeon Tech.) |
|---|---|---|
| Set up | 0.0 | 0.0 |
| 5 hours | 57.5 | 61.3 |
| 24 hours | 67.9 | 80.8 |
| 3 days | 80.5 | 86.3 |
| 7 days | 86.7 | 84.9 |
| Feeding Damage (Mean %) | | |
| Set up | 0 | 0 |
| 5 hours | 6.09 | 5.78 |
| 24 hours | 11.41 | 10.94 |
| 3 days | 14.38 | 15.16 |
| 7 days | 19.38 | 17.50 |

The current trial proves the efficacy of the composition according to the invention against Colorado Beetle in potato. The number of larvae was considerably reduced during the experiment and showed a similar knock-down effect and a similar foliar feeding rate in percentage when compared to the reference product.

2.2. Biological Efficacy against Cotton bollworm (*Helicoverpa armigera*) and Foliar feeding damage, in Tomato

Test description:

Caterpillar eggs were hatched on site and the animals transferred to the tomato plants on the same day.

For the determination of the efficacy against cotton bollworm, the number of larvae and percentage of damage on all plants were assessed 5 h, 24 h, 5 days and 7 days after application of the compositions, with a concentration of 100 g/l and a dosage rate of 2.0 g/hl of a.i. each. Larvae were inoculated 24 hours (+/- 2 hours) before application and treated together with the plants. The data obtained was statistically evaluated. The efficacies and foliar feeding damage for the composition claimed herein *vs.* reference product were calculated accordingly. These values are presented in Table 8, Figure 3 and Figure 4.

Table 8 - Efficacy according to Abbot against *Helicoverpa armigera* and mean percentage of Foliar feeding Damage

| | CS formulation according to the invention (100g/l) | Reference product (KARATE®,100 g/l with Zeon Tech.) |
|---|---|---|
| Set up | 0.0 | 0.0 |
| 5 hours | 95.6 | 88.8 |
| 24 hours | 95.6 | 88.7 |
| 3 days | 96.8 | 88.7 |
| 7 days | 99.3 | 89.4 |
| Feeding Damage (Mean %) | | |
| Set up | 0 | 0 |
| 5 hours | 3.69 | 4.00 |
| 24 hours | 3.69 | 4.00 |
| 3 days | 3.91 | 4.25 |
| 7 days | 3.91 | 4.34 |

The current trial proves the efficacy of the composition according to the invention against Cotton bollworm in tomato. The number of larvae was significantly reduced 7 days after the application, showed a similar knock-down effect and did not show a lower feeding rate, when compared to the reference product.

**FIELD TRIALS FOR BIOLOGICAL EFFICACY EVALUATION**

The performance of the field trials described below had the sole intention to evaluate the biological efficacy against common and hazardous crop pests. This evaluation was performed by comparing the claimed compositions in the present specification against the marketed reference products: KARATE®, marketed by Syngenta in the case of lambda-cyhalothrin CS formulation, and AFICION®, marketed by Makhteshim in the case of the lambda-cyhalothrin plus imidacloprid ZC formulation. The last product, AFICION®, consists of an Emulsion Concentrate comprising cyfluthrin (25 g/l) and imidacloprid (75 g/l) as active substances. As it will be evident by the following description, the level of insect control and foliar feeding damage achieved using the compositions according to the invention are comparable to the results presented by the reference products.

**A. Control of Beetle (*Leptinotarsa decemlineata*) in potato crop**

The trials were conducted according to the following European and Mediterranean Plant Protection Organization (EPPO) protocols:

- PP 1/12(3) - *Leptinotarsa decemlineata;*
- PP 1/152(2) - Design and analysis of efficacy evaluation trials;
- PP 1/181(3) - Conduct and reporting of efficacy evaluation trials including good experimental practique.

Experimental Procedure

The compositions were applied in random blocks with four replications using a witness for the statistical treatment of the data. The area of the plot unit was of 24,8 $m^2$ (3,1 m x 8 m). The distance used between the lines of the potato was of 0,7 m and between the plants was of 0,3 m, totaling approximately 120 plants for each plot unit. The application was performed on the beginning of the first larvae states of the Colorado beetle (*Leptinotarsa decemlineata*).

A.1 Lambda-cyhalothrin CS composition according to the invention *vs.* KARATE®

The concentration used in the field trial was of 20 mL/hl (2.0 g/hl of a.i.) for both the composition according to the invention and reference product KARATE®.

Assessments were performed in 10 potato plants by unit plot, and the beetles were counted in its larvae state, according to OEPP protocol depicted above. The counts were performed at different times as follows for 3 different potato varieties:

Hermes: Before application, 3, 8 and 14 days after application.

Arranconsul: Before application, 2, 7 and 11 days after application.

Condor: Before application, 2, 7 and 14 days after application.

The efficacy and foliar feeding damage were calculated using suitable statistical analysis commonly used by a person skilled in the art and the results are presented in Table 9, table 10 and table 11.

Table 9 - Efficacy and Foliar feeding damage in Potato, Hermes variety

| | | Lambda-cyhalothrin compositon according to the invention (CS, 100 g/l) | Karate with Zeon Technology (CS, 100 g/l) |
|---|---|---|---|
| % efficacy | 3 days | 70.45 | 63.90 |
| | 8 days | 81.82 | 78.32 |
| | 14 days | 82.14 | 79.54 |
| Foliar feeding damage (%) | 14 days | 5.63 | 6.25 |

Table 10 - Efficacy and Foliar feeding damage in Potato, Arranconsul variety

| | | Lambda-cyhalothrin composition according to the invention (CS, 100 g/l) | Karate with Zeon Technology (CS, 100 g/l) |
|---|---|---|---|
| % efficacy | 2 days | 72.13 | 75.91 |
| | 7 days | 81.43 | 83.48 |
| | 14 days | 82.48 | 86.78 |
| Foliar Feeding damage (%) | 14 days | 18.75 | 11.25 |

Table 11 - Efficacy and Foliar feeding damage in Potato, Condor variety

| | | Lambda-cyhalothrin composition according to the invention (CS, 100 g/l) | Karate with Zeon Technology (CS, 100 g/l) |
|---|---|---|---|
| % efficacy | 2 days | 46.98 | 60.23 |
| | 7 days | 69.83 | 66.87 |
| | 14 days | 87.66 | 86.99 |
| Foliar feeding damage (%) | 14 days | 15.00 | 20.00 |

The foregoing results show that there are no significance statistical differences between the composition according to the invention and the reference product, both possessing comparable biological efficacies.

A.2 Lambda-cyhalothrin and imidacloprid ZC composition according to the invention *vs*. AFICION®

The concentration used in the field trial was of 100 ml/hl (7.5 g/hl of imidacloprid and 1.2 g/hl of lambda-cyhalothrin) for the composition according to the invention, and 100 ml/hl (7.5 g/hl of imidacloprid and 2.5 g/hl of cyfluthrin) for the reference product AFICION®.

Assessments were performed in 10 potato plants by unit plot, and the beetles were counted in its larvae state, according to OEPP protocol depicted above. The counts were performed at different times as follows for 3 different potato varieties:

Hermes: Before application, 3, 8 and 14 days after application.

Picasso: Before application, 3, 7 and 14 days after application.

Arranconsul: Before application, 4, 8 and 15 days after application.

The efficacy and foliar feeding damage were calculated using suitable statistical analysis commonly used by a person skilled in the art and the results are presented in Table 12, table 13 and table 14.

Table 12 - Efficacy and Foliar feeding damage in Potato, Hermes variety

| | | Lambda-cyhalothrin and imidacloprid ZC composition according to the invention (ZC, 75 g/l ; 12g/l) | AFICION® (EC, with 25 g/l of cyfluthrin and 75 g/l of imidacloprid |
|---|---|---|---|
| % efficacy | 3 days | 98.97 | 99.56 |
| | 8 days | 100 | 100 |
| | 14 days | 97.98 | 100 |
| Foliar feeding damage (%) | 14 days | 2.50 | 2.50 |

Table 13 - Efficacy and Foliar damage in Potato, Arranconsul variety

| | | Lambda-cyhalothrin and imidacloprid ZC composition according to the invention (ZC, 75 g/l; 12.5 g/l) | AFICION® (EC, with 25 g/l of cyfluthrin and 75 g/l of imidacloprid |
|---|---|---|---|
| % efficacy | 4 days | 100 | 100 |
| | 8 days | 99.88 | 100 |

(continued)

| | | Lambda-cyhalothrin and imidacloprid ZC composition according to the invention (ZC, 75 g/l; 12.5 g/l) | AFICION® (EC, with 25 g/l of cyfluthrin and 75 g/l of imidacloprid |
|---|---|---|---|
| | 15 days | 99.29 | 99.80 |
| Foliar feeding damage (%) | 15 days | 5.00 | 3.13 |

Table 14 - Efficacy and Foliar feeding damage in Potato, Picasso variety

| | | Lambda-cyhalothrin and imidacloprid ZC composition according to the invention (ZC, 75g/l ; 12.5) | AFICION® (EC, with 25g/l of cyfluthrin and 75g/l of imidacloprid |
|---|---|---|---|
| % efficacy | 3 days | 100 | 100 |
| | 7 days | 100 | 100 |
| | 14 days | 100 | 100 |
| Foliar feeding damage (%) | 14 days | 3.75 | 4.38 |

The foregoing results show that the formulation according to the invention does not show no significance statistical differences when compared to the reference product and possess comparable biological efficacies. The emulsion concentrate available in the market might suffer from issues regarding end-user application, in that the skin irritant pyrethroid is present in the free form. On the other hand, the ZC formulation according to the present invention does not show a decrease of efficacy due to the fact that the pyrethroid is encapsulated, which renders it a beneficial and surprisingly usability in terms of environmental safety for the end-user.

## Claims

**1.** An agrochemical formulation comprising microencapsulated lambda-cyhalothrin suspended in water, **characterized in that**

- the microcapsules are made of a polyurethane,
- at least 90% of the microcapsules have a diameter of less than 13 μm, and

it further comprises suspended particles of imidacloprid,
wherein
the concentration of lambda-cyhalothrin ranges between 9 and 15 g/l, and the concentration of imidacloprid ranges between 50 and 100 g/l.

**2.** The agrochemical formulation according to claim 1, **characterized in that** the concentration of lambda-cyhalothrin is 12 g/l, and the concentration of imidacloprid is 75 g/l.

**3.** A process of production of the agrochemical formulation defined in claim 1, **characterized in that** it comprises the following steps:

- preparing an aqueous phase by dissolving gum arabic in water;
- preparing an oil phase by dissolving lambda-cyhalothrin, and an isocyanate in a $C_9$ to $C_{12}$ aromatic solvent;
- dispersing the oil phase into the aqueous phase, using a high shear mixer;
- adding to the dispersion a previously prepared solution of a triol in water;
- adding an anti-freeze agent, heating to a temperature in the range of 50 to 70 °C, and allowing to react for 24 hours under mild agitation;

- cooling to room temperature, adding water in order to adjust the active ingredient concentration, and
- adding an aqueous solution containing 2% xanthan gum and 0.2% of a benzisothiazolinone, to obtain microencapsulated lambda cyhalothrin,

further comprising the steps of
- preparing an imidacloprid suspension concentrate by mixing imidacloprid, an anti-freeze agent, at least one surfactant and an anti-foam agent in water, followed by wet milling in a bead mill and adjusting the viscosity of the suspension by adding an aqueous solution containing 2% xanthan gum and 0.2% of a benzisothiazolinone;
- mixing the imidacloprid suspension concentrate formulation thus obtained, the microencapsulated lambda-cyhalothrin and water, and
- adding an aqueous solution containing 2% xanthan gum and 0.2% of a benzisothiazolinone.

**4.** The process according to claim 3, **characterized in that** the isocyanate is toluene diisocyanate and/or isophoronediisocyanate and/or hexamethylene diisocyanante and the triol is trimethylol propane.

**5.** The process according to claim 3 **characterized in that** the molar ratio of triol to isocyanate is from 0.8:1.2 to 1.2:0.8.

**6.** The process according to any of claims 3 to 5 **characterized in that** it comprises the steps of:

preparing a microencapsulated lambda-cyhalothrin formulation by

- dissolving 17.0 parts by weight of gum arabic in 325.0 parts by weight of water;
- preparing an oil phase by dissolving 99.3 parts by weight of lambda-cyhalothrin and 6.2 parts by weight of toluene diisocyanate in 99.3 parts by weight of a $C_9$ to $C_{12}$ aromatic solvent;
- dispersing the oil phase into the water phase by using a high shear mixer to form droplets having a size distribution with $d_{90}$ less than 13 $\mu$m;
- preparing a solution of 4.8 parts by weight of trimethylolpropane in 7.2 parts by weight of water;
- adding the above solution to the dispersion previously obtained;
- adding 6.2 parts by weight of propylene glycol to the dispersion and heat to 60 °C, and allowing to react for 24 hours at 60 °C, under mild agitation;
- cooling to room temperature, adding 133.0 parts by weight of an aqueous solution containing 2% xanthan gum and 0.2% of a benzisothiazolinone and mixing;

further comprising the steps of preparing an imidacloprid suspension concentrate comprising the steps of:

- adding, 408.2 parts by weight of water, 76.3 parts by weight of propylene glycol, 34.1 parts by weight of a polymethyl methacrylate-polyethylene oxide graft copolymer, 23.8 parts by weight of a polyoxyethylene alkyl ether, 0.25 parts by weight of an aqueous polydimethylsiloxane emulsion, 350.0 parts by weight of imidacloprid and mixing so as to obtain an homogeneous suspension;
- pumping the resulting mixture through a refrigerated bead mill, until a particle size distribution with $d_{90}$ within the range from 5 to 10 $\mu$m is obtained;
- adding 0.25 parts by weight of an aqueous polydimethylsiloxane emulsion;
- adding 100.0 parts by weight of an aqueous solution containing 2% xanthan gum and 0.2% of a benzisothiazolinone and mixing thoroughly;
- mixing, under mild agitation, 210.1 parts by weight of the imidacloprid suspension concentrate obtained in the above step with 118.4 parts by weight of the microencapsulated lambda-cyhalothrin formulation and 663.9 parts by weight of water;
- adding 7.6 parts by weight of an aqueous solution containing 2% xanthan gum and 0.2% of a benzisothiazolinone and mixing thoroughly to obtain a ZC formulation comprising 12 g/l of lambda-cyhalothrin and 75 g/l of imidacloprid.

**7.** Use of the formulation of the claims 1 or 2, **characterized in that** it applies for the control of insects that affect edible crops selected from the group comprising potato, tomato, pome fruits, stone fruits, citrus, grapevines, vegetables, maize, cereals; and non-edible crops selected from the group comprising ornamental crops, amenities and forest trees.

**8.** Use according to claim 7 **characterized in that** it applies for the control of potato Colorado beetle.

## Patentansprüche

1. Eine agrochemische Formulierung bestehend aus mikroverkapselten Lambda-Cyhalothrin in Wasser suspendiert, **dadurch gekennzeichnet, dass**

   - die Mikrokapseln aus Polyurethan bestehen,
   - mindestens 90% der Mikrokapseln einen Durchmesser von weniger als 13 μm aufweisen, und

   dass es ferner suspendierte Partikel aus Imidacloprid umfasst,
   wobei
   die Konzentration von Lambda-Cyhalothrin zwischen 9 und 15 g/l beträgt und die Konzentration von Imidacloprid zwischen 50 und 100 g/l beträgt.

2. Die agrochemische Formulierung nach Anspruch 1 ist **dadurch gekennzeichnet, dass** die Konzentration von Lambda-Cyhalothrin 12 g/l und die Konzentration von Imidacloprid 75 g/l ist.

3. Ein Produktionsverfahren der agrochemischen Formulierung nach Anspruch 1, **dadurch gekennzeichnet, dass** es die folgenden Schritte umfasst:

   - Herstellung einer wässrigen Phase durch Auflösen von Gummiarabikum in Wasser;
   - Herstellung einer Ölphase durch das Auflösen von Lambda-Cyhalothrin und eines Isocyanats in einem $C_9$-$C_{12}$ aromatischen Lösungsmittel;
   - dispergieren der Ölphase in der wässrigen Phase mit Hilfe eines Scherkraft-Mischers;
   - hinzufügen zur Dispersion einer zuvor hergestellten Lösung eines Triols in Wasser;
   - hinzufügen eines Frostschutzmittels, erwärmen auf eine Temperatur im Bereich von 50 bis 70 °C und für 24 Stunden unter leichtem Rühren reagieren lassen;
   - abkühlen auf Raumtemperatur und hinzufügen von Wasser, um die Wirkstoffkonzentration zu korrigieren, sowie
   - hinzufügen einer wässrigen Lösung mit 2% Xanthan und 0,2% von Benzisothiazolinon, um mikroverkapseltes Lambda-Cyhalothrin zu erhalten,

   sowie die folgenden Schritte:

   - Herstellung eines Imidacloprid-Suspensionskonzentrats, indem Imidacloprid, ein Frostschutzmittel, mindestens ein Tensid und ein Antischaummittel in Wasser gemischt werden, gefolgt von einer Nassmahlung in einer Rührwerkskugelmühle und Anpassung der Viskosität durch Hinzufügen einer wässrigen Lösung mit 2% Xanthan und 0,2% von Benzisothiazolinon;
   - die somit erhaltene Imidacloprid-Suspensionskonzentratformulierung mit dem mikroverkapselten Lambda-Cyhalothrin und Wasser mischen und
   - eine wässrige Lösung mit 2% Xanthan und 0,2% von Benzisothiazolinon hinzufügen.

4. Der Vorgang nach Anspruch 3 ist **dadurch gekennzeichnet, dass** das Isocyanat Toluoldiisocyanat bzw. Isophorondiisocyanat bzw. Hexamethylendiisocyanat ist und das Triol Trimethylolpropan ist.

5. Der Vorgang nach Anspruch 3 ist **dadurch gekennzeichnet, dass** das Molverhältnis von Triol zu Isocyanat von 0.8:1,2 bis zu 1.2:0,8 reicht.

6. Der Vorgang entsprechend aller Ansprüche von 3 bis 5 ist **dadurch gekennzeichnet, dass** er die folgenden Schritte umfasst:

   Herstellung einer mikroverkapselten Lambda-Cyhalothrin-Formulierung durch

   - auflösen von 17,0 Gewichtsteilen Arabikum in 325,0 Gewichtsteilen Wasser;
   - herstellen einer Ölphase durch Auflösen von 99,3 Gewichtsteilen Lambda-Cyhalothrin und 6,2 Gewichtsteilen Toluoldiisocyanat in 99,3 Gewichtsteilen $C_9$-$C_{12}$ aromatisches Lösungsmittel;
   - dispergieren der Ölphase in der Wasserphase mit Hilfe eines Scherkraft-Mischers, bis sich Tröpfchen mit einer Größenverteilung von $d_{90}$ unter 13 μm bilden;
   - herstellen einer Lösung mit 4,8 Gewichtsteilen Trimethylolpropan in 7,2 Gewichtsteilen Wasser;
   - diese Lösung zu der zuvor erhaltenen Dispersion hinzufügen;
   - 6,2 Gewichtsteile Propylenglycol zur Dispersion hinzufügen und auf 60 °C erhitzen, für 24 Stunden bei

60 °C unter leichtem Rühren reagieren lassen;
- auf Raumtemperatur abkühlen lassen und 133,0 Gewichtsteile einer wässrigen Lösung mit 2% Xanthan und 0,2% eines Benzisothiazolinon hinzufügen und mischen;

Es folgen die Schritte der Herstellung einer Imidacloprid-Suspension, welche die folgenden Schritte umfasst:

- hinzufügen von 408,2 Gewichtsteilen Wasser, 76,3 Gewichtsteilen Propylenglycol, 34,1 Gewichtsteilen eines Polymethylmethacrylat-Polyethylenoxid-Pfropfcopolymers, 23,8 Gewichtsteilen eines Polyoxyethylenalkylethers, 0,25 Gewichtsteile einer wässrigen Polydimethylsiloxan-Emulsion, 350,0 Gewichtsteile Imidacloprid und bis zum Erhalt einer homogenen Lösung mischen;
- die so erhaltene Mischung durch eine gekühlte Rührwerkskugelmühle pumpen, bis eine Partikelgrößenverteilung von $d_{90}$ innerhalb eines Bereiches von 5 bis 10 μm erreicht wird;
- hinzufügen von 0,25 Gewichtsteilen einer wässrigen Polydimethylsiloxan-Emulsion;
- hinzufügen von 100,0 Gewichtsteilen einer wässrigen Lösung mit 2% Xanthan und 0,2% eines Benzisothiazolinons und gut mischen;
- unter leichtem Rühren 210,1 Gewichtsteile des im oberen Schritt erhaltenen Imidacloprid-Suspensionskonzentrats mit 118,4 Gewichtsteilen der mikroverkapselten Lambda-Cyhalothrin-Formulierung und 663,9 Gewichtsteilen Wasser mischen;
- 7,6 Gewichtsteile einer wässrigen Lösung mit 2% Xanthan und 0,2% eines Benzisothiazolinons hinzufügen, gut mischen, um eine ZC-Formulierung mit 12 g/l Lambda-Cyhalothrin und 75 g/l Imidacloprid zu erhalten.

**7.** Die Formulierung der Ansprüche 1 und 2 findet ihre Anwendung in der Bekämpfung von Insekten, die essbare Feldfrüchte, ausgewählt aus der Gruppe einschließlich Kartoffeln, Tomaten, Kernobst, Steinfrüchte, Zitrusfrüchte, Weintrauben, Gemüse, Mais und Getreide, befällt; sowie nicht-essbare Feldfrüchte, ausgewählt aus der Gruppe einschließlich Zierpflanzen, Zier- und Waldbäume umfasst.

**8.** Die Verwendung nach Anspruch 7 ist **dadurch gekennzeichnet, dass** sie zur Bekämpfung von Kartoffelkäfer dient.

## Revendications

**1.** Formulation agrochimique comprenant une suspension en eau de lambda-cyhalothrine micro-encapsulée, **caractérisée en ce que** :

- les microcapsules sont faites d’un polyuréthane,
- au moins 90% des microcapsules possèdent un diamètre inférieur à 13 μm, et
comprenant en outre des particules d’imidaclopride en suspension,
où
la concentration de lambda-cyhalothrine est comprise entre 9 et 15 g/l, et la concentration d’imidaclopride est comprise entre 50 et 100 g/l.

**2.** Formulation agrochimique selon la revendication 1, **caractérisée en ce que** la concentration de lambda-cyhalothrine est de 12 g/l, et la concentration d’imidaclopride est de 75 g/l.

**3.** Procédé pour la préparation de la formulation selon la revendication 1, **caractérisée en ce qu’**il comprend les étapes suivantes :

- préparer une phase aqueuse en dissolvant la gomme arabique dans de l’eau ;
- préparer une phase huileuse en dissolvant la lambda-cyhalothrine, et un isocyanate dans un solvant aromatique de $C_9$ à $C_{12}$ ;
- disperser la phase huileuse dans la phase aqueuse, en utilisant un mélangeur à haut cisaillement ;
- ajouter à la dispersion une solution préalablement préparée d’un triol dans l’eau ;
- ajouter un agent antigel, chauffer à une température entre 50 et 70° C et laisser réagir pendant 24 heures sous légère agitation ;
- refroidir à la température ambiante, ajouter de l’eau pour ajuster la concentration de matière active, et
- ajouter une solution aqueuse contenant 2% de gomme xanthane et 0,2% de benzisothiazolinone, pour obtenir la lambda-cyhalothrine micro-encapsulée,

comprenant en outre les étapes suivantes :

- préparer une suspension concentrée d'imidaclopride en mélangeant l'imidaclopride, un agent antigel, au moins un tensioactif et un agent anti mousse dans de l'eau, suivi par un broyage par voie humide dans un broyeur à billes et ajuster la viscosité de la suspension en ajoutant une solution aqueuse contenant 2% de gomme xanthane et 0,2% de benzisothiazolinone ;
- mélanger la suspension concentrée d'imidaclopride ainsi obtenue, la lambda-cyhalothrine micro-encapsulée et de l'eau, et
- ajouter une solution aqueuse contenant 2% de gomme xanthane et 0,2% de benzisothiazolinone.

**4.** Procédé selon la revendication 3, **caractérisé en ce que** l'isocyanate est le toluène diisocyanate et/ou diisocyanate d'isophorone et/ou diisocyanate d'hexaméthylène et le triol est le triméthylolpropane.

**5.** Procédé selon da revendication 3, **caractérisé en ce que** le rapport molaire entre le triol et l'isocyanate est compris entre 0.8:1.2 et 1.2:0.8.

**6.** Procédé selon l'une quelconque des revendications 3 à 5, **caractérisé en ce qu'**il comprend les étapes suivantes:

- préparer une formulation micro-encapsulée de lambda-cyhalothrine par :
- dissoudre 17.0 parties en poids de gomme arabique dans 325.0 parties en poids d'eau ;
- préparer une phase huileuse, en dissolvant 99.3 parties en poids de lambda-cyhalothrine et 6.2 parties en poids de toluène diisocyanate dans 99.3 parties en poids d'un solvant aromatique de $C_9$ à $C_{12}$;
- disperser la phase huileuse dans la phase aqueuse en utilisant un mélangeur à haut cisaillement pour former des gouttelettes ayant une distribution de taille avec $d_{90}$ inférieure à 13 $\mu$m;
- préparer une solution de 4.8 parties en poids de triméthylolpropane dans 7.2 parties en poids d'eau ;
- ajouter la solution ci-dessus à la dispersion précédemment obtenue ;
- ajouter 6.2 parties en poids de propylène glycol à la dispersion, chauffer à 60° C et laisser réagir pendant 24 heures à 60° C, sous agitation légère ;
- refroidir à la température ambiante, ajouter 113.0 parties en poids d'une solution aqueuse contenant 2% de gomme xanthane et 0.2% de benzisothiazolinone et mélanger ;

comprenant en outre les étapes de préparation d'une suspension concentrée d'imidaclopride, comprenant les étapes suivantes :

  - additionner 408.2 parties en poids d'eau, 76.3 parties en poids de propylène glycol, 34.1 parties en poids d'un copolymère greffé d'oxyde de polyéthylène-polyméthacrylate de méthyle, 23.8 parties en poids de polyoxyéthylène alkyléther, 0.25 parties en poids d'une émulsion aqueuse de polydiméthylsiloxane, 350.0 parties en poids d'imidaclopride et mélanger jusqu'à obtenir une suspension homogène ;
  - pomper le mélange à travers un broyeur à billes réfrigéré, jusqu'à obtenir une distribution de taille de particule avec $d_{90}$ compris entre 5 et 10 $\mu$m;
  - ajouter 0.25 parties en poids d'une émulsion aqueuse de polydiméthylsiloxane;
  - ajouter 100.0 parties en poids d'une solution aqueuse contenant 2% de gomme xanthane et 0.2% de benzisothiazolinone et mélanger soigneusement ;

- mélanger, sous légère agitation, 210.1 parties en poids de suspension concentrée d'imidaclopride obtenue dans l'étape précédente avec 118.4 parties en poids de la formulation de lambda-cyhalothrine micro-encapsulée et 663.9 parties en poids d'eau ;
- ajouter 7.6 parties en poids d'une solution aqueuse contenant 2% de gomme xanthane et 0.2% de benzisothiazolinone et mélanger soigneusement afin d'obtenir une formulation ZC comprenant 12 g/l de lambda-cyhalothrine et 75g/l d'imidaclopride.

**7.** Utilisation de la formulation selon les revendications 1 ou 2, pour le contrôle des insectes qui affectent les cultures alimentaires choisies dans le groupe comprenant la pomme de terre, la tomate, les fruits à pépins, les fruits à noyau, les agrumes, la vigne, les légumes, le maïs, les céréales; et les cultures non comestibles choisis dans le groupe comprenant les cultures ornementales, des équipements et des arbres de la forêt.

**8.** Utilisation selon da revendication 7 pour le contrôle du doryphore de la pomme de terre.

Figure 1

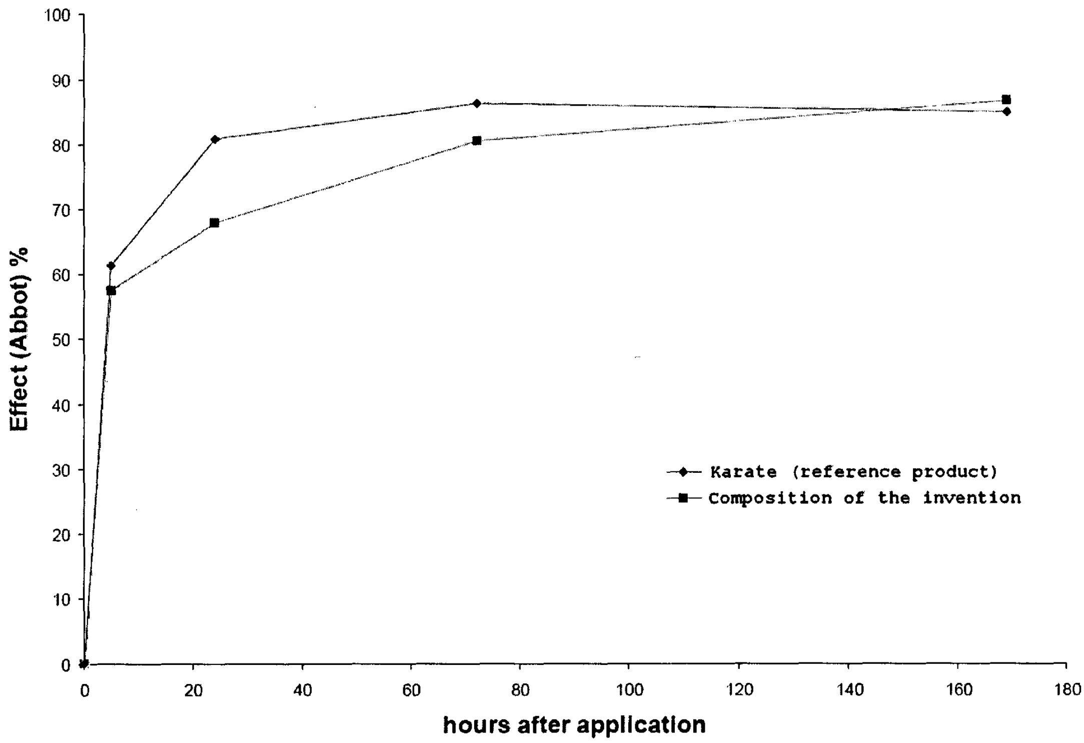
100
90
80
70
60
50
40
30
20
10
0
Effect (Abbot) %
0
20
40
60
80
100
120
140
160
180
hours after application
Karate (reference product)
Composition of the invention

Figure 2

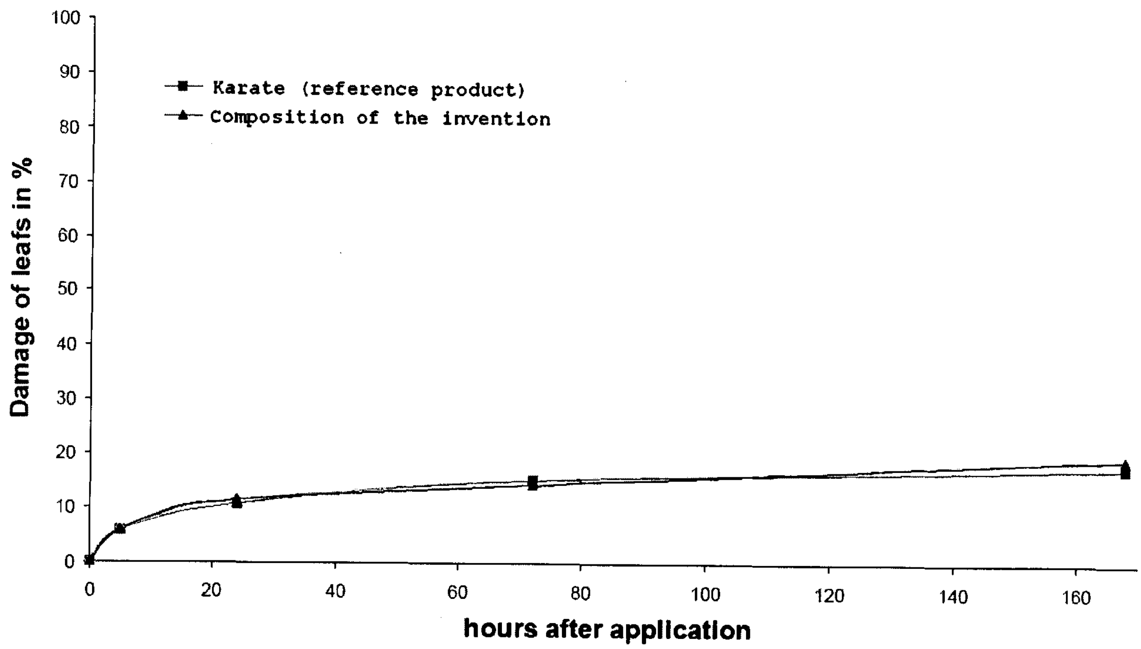
100
90
80
70
60
50
40
30
20
10
0
Damage of leafs in %
Karate (reference product)
Composition of the invention
0
20
40
60
80
100
120
140
160
hours after application

Figure 3

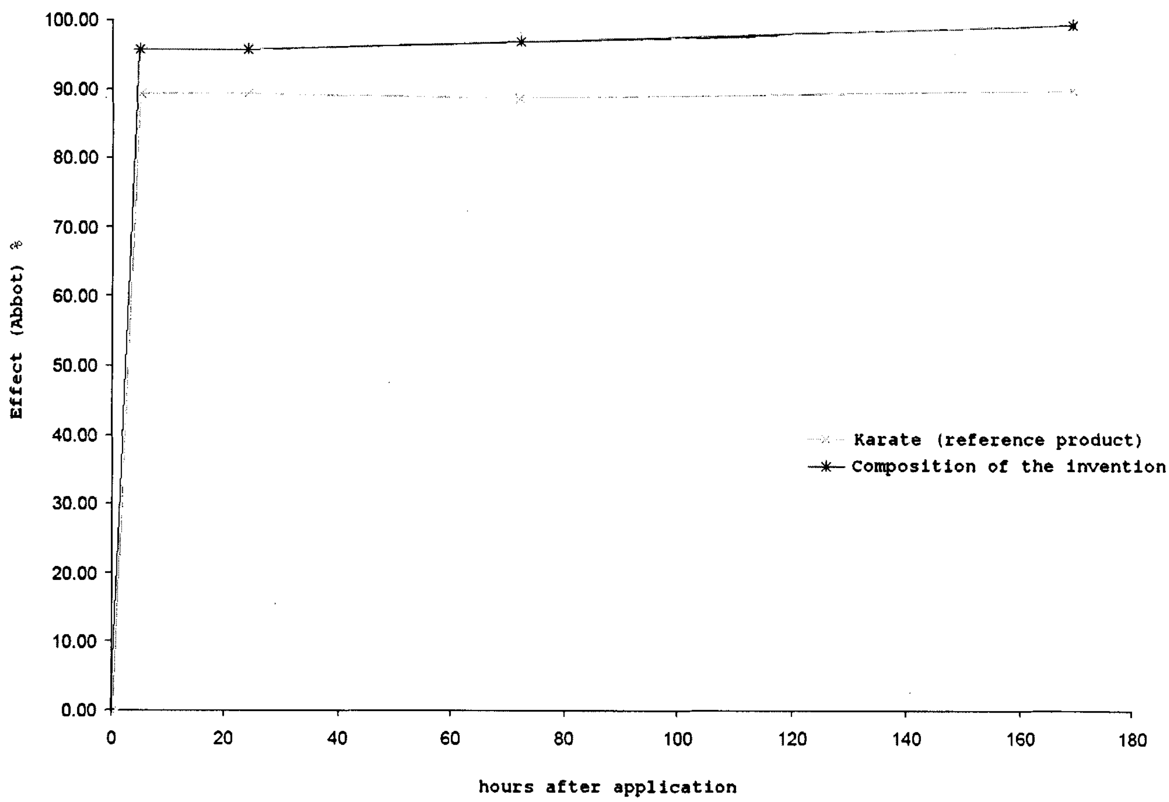
100.00
90.00
80.00
70.00
60.00
50.00
40.00
30.00
20.00
10.00
0.00
0
20
40
60
80
100
120
140
160
180
Effect (Abbot) %
hours after application
Karate (reference product)
Composition of the invention

Figure 4

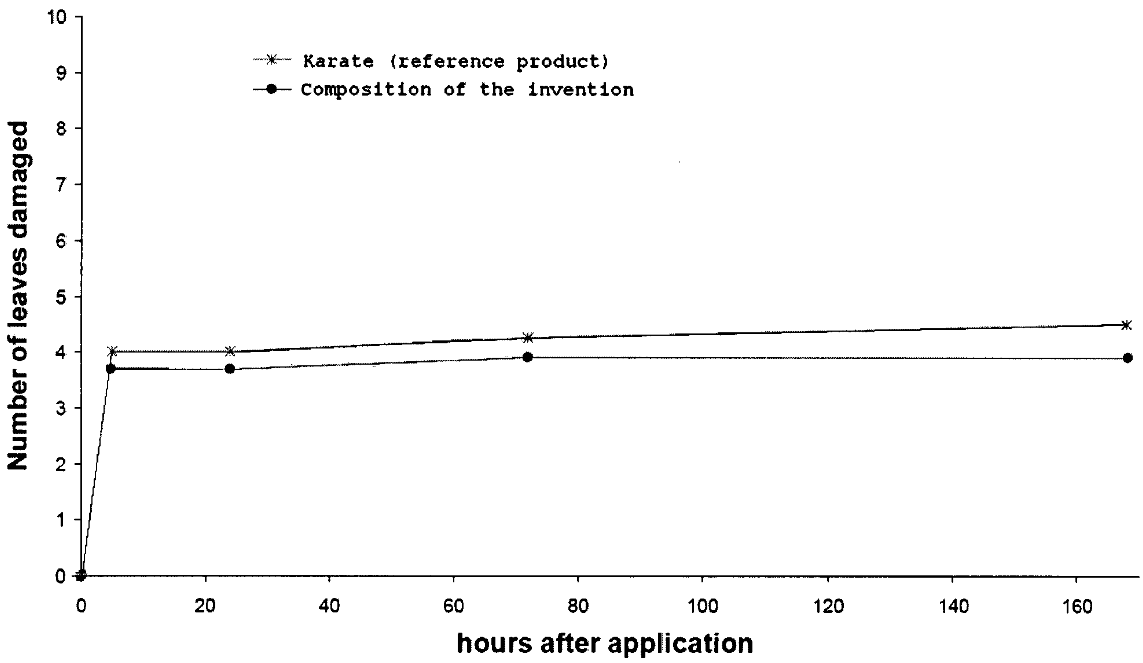
Karate (reference product)
Composition of the invention
Number of leaves damaged
hours after application
0
1
2
3
4
5
6
7
8
9
10
0
20
40
60
80
100
120
140
160

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 0107296 A
- EP 0427991 B1
- EP 0902724 A
- US 6077522 A
- US 6149843 A
- EP 2225940 A
- EP 0192060 A1
- WO 2005015993 A
- WO 2006008614 A


### Non-patent literature cited in the description


- Insecticide Resistance Action Committee. *IRAC MoA Classification V.7.2,* February 2012
- *Environmental Health Criteria 99: Cyhalothrin,* 1990
- Manual on the Development and Use of FAO and WHO Specifications for Pesticides. November 2010
- CIPAC Handbooks. Collaborative International Pesticides Analytical Council, vol. 1A to N
- **ABBOTT, W. S.** A method of computing the effectiveness of an Insecticide. *J. of Econ. Entomol.,* 1925, vol. 18, 265-267
- **SCHNEIDER-ORELLI O.** Entomologisches Praktikum. 1947
- **COLBY, R. S.** Calculating synergistic and antagonistic responses of herbicide combinations. *Weeds,* 1967, vol. 1S, 20-22